# EUROPÄISCHE PATENTANMELDUNG

(11) **EP 1 544 491 A1**
(43) Veröffentlichungstag der Anmeldung: **22.06.2005**
(21) Anmeldenummer: 04029001.7
(22) Anmeldetag: 07.12.2004
(51) Int. Cl.: F16D 23/04, F16D 69/02

(54) **Synchronisiereinrichtung für ein Schaltgetriebe**

(30) Priorität: 20.12.2003 DE 10360145
(71) Anmelder: DaimlerChrysler AG, 70567 Stuttgart (DE)
(72) Erfinder: Eberspächer, Christof, Dr., 73730 Esslingen (DE)

(57) **Zusammenfassung**

Die Erfindung betrifft eine Synchronisiereinrichtung (1) für ein Schaltgetriebe, mit mindestens zwei durch Reibung zusammenwirkenden Gleichlaufringen (5,6) aus Stahl, wobei zumindest einer der Gleichlaufringe (5,6) zumindest im Bereich seiner Reibkontaktfläche eine Mangan-Phosphat-Beschichtung aufweist.

## Beschreibung

Die Erfindung betrifft eine Synchronisiereinrichtung für ein Schaltgetriebe mit den Merkmalen des Oberbegriffs des Patentanspruchs 1.

Solche Synchronisiereinrichtungen werden standardmäßig in Personen- oder Lastkraftfahrzeuge für ein möglichst einfaches und komfortables Schalten eingebaut.

Die DE 31 22 522 A1 offenbart eine Synchronisiereinrichtung, bei der die Gleitlaufringe mit einem nichtmetallischen, anorganischen Werkstoff beschichtet sind.

Die DE 198 37 583 C1 offenbart ein Verfahren zum Nitrierhärten der Gleichlaufringe durch Plasma als einfache und kostengünstige Beschichtung der Reibpartner, um gleichbleibende Reibungsverhältnisse sicherzustellen.

Der vorliegenden Erfindung liegt die Aufgabe zu Grunde, eine Synchronisiereinrichtung so weiterzubilden, dass die zusammenwirkenden Reibflächen eine geringe Rauhigkeit aufweisen.

Zur Lösung der Aufgabe wird vorgeschlagen, eine Synchronisiereinrichtung der gattungsgemäßen Art mit den Merkmalen des Kennzeichnens des Patentanspruchs 1 auszubilden.

Die Beschichtung mit Mangan-Phosphat erfolgt in einfacher und preiswerter Weise und führt zu einer deutlich verminderten Reibungszahl, wodurch die Synchronisierungsvorgänge der Gleichlaufringe einfacher und für den Nutzer komfortabler gestaltet werden. Unter Gleichlaufringen sind Reibpaarungen in synchronisierten Getrieben zu verstehen, deren unterschiedlich schnelle Drehbewegungen durch einen Reibkontakt synchronisiert werden.

Zwischen zu synchronisierenden Gleichlaufringen kann in Weiterbildung auch zumindest ein ebenfalls eine Mangan-Phosphat-Beschichtung aufweisender Zwischenring angeordnet sein.

Um die Reibeigenschaften weiter zu verbessern, ist die Mangan-Phosphat-Beschichtung beölt.

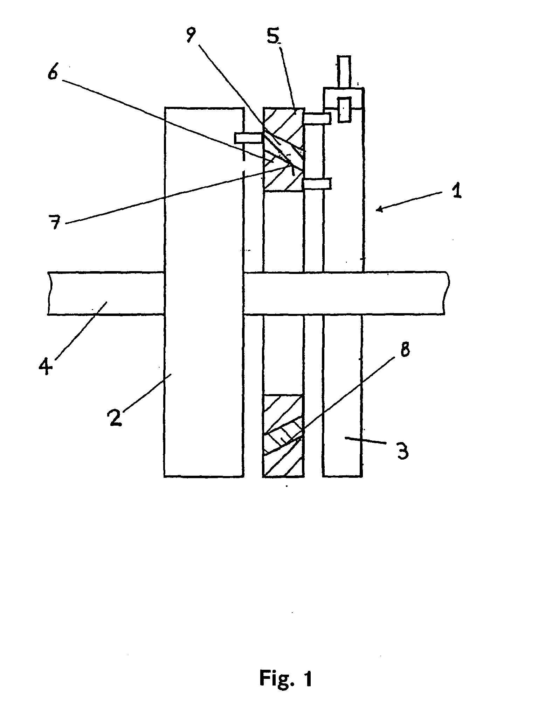

Weitere Vorteile und Merkmale der Erfindung können der Beschreibung zu dem in der Zeichnung dargestellten Ausführungsbeispiel sowie den einzelnen Patentansprüchen entnommen werden.

Die einzige Figur zeigt eine schematisierte Darstellung eines Teils eines Schaltgetriebes mit einer Synchronisiereinrichtung.

Die in der einzigen Figur beispielhaft gezeigte, in herkömmlicher Weise ausgebildete Synchronisiereinrichtung 1 eines nicht näher dargestellten Schaltgetriebes eines Personen- oder Lastkraftwagens, synchronisiert die Geschwindigkeit der Drehbewegung eines Gangrades 2 mit der zu dieser unterschiedlichen Geschwindigkeit der Drehbewegung eines Gleichlaufkörpers 3.

Die Synchronisierung ist notwendig, da bei Getrieben ein Gang nur dann einwandfrei geschaltet werden kann, wenn die zwei miteinander in Eingriff zu bringenden Zahnräder gleiche Umfangsgeschwindigkeiten aufweisen. Das mit dem Gangrad 2 zusammenwirkende Zahnrad ist an dem Gleichlaufkörper 3 angeordnet und wird durch den Synchronisiervorgang zwischen dem Gangrad 2 und dem Gleichlaufkörper 3 auf die notwendige Drehgeschwindigkeit beschleunigt oder abgebremst.

Das Gangrad 2 und der Gleichlaufkörper 3 sind auf einer gemeinsamen Welle 4 angeordnet.

Das Gangrad 2 und der Gleichlaufkörper 3 werden bei dem Synchronisiervorgang über Gleichlaufringe 5,6 in Kontakt gebracht. Dabei ist der Gleichlaufring 6 an dem Gangrad 2 und der Gleichlaufring 5 an dem Gleichlaufkörper 3 fest angeordnet.

Die Gleichringe 5,6 sind konzentrisch zu der Welle 4 angeordnet, wobei in dem gezeigten Ausführungsbeispiel der Gleichlaufring 6 innenliegend und der Gleichlaufring 5 außenliegend ist. An den einander zugewandten Flächen sind die beiden Gleichlaufringe 5,6 konisch ausgebildet. Dies erleichtert das Ineinanderschieben der beiden Gleichlaufringe, um mit dem dabei entstehenden Reibkontakt an den beiden konischen Flächen die Drehgeschwindigkeit des Gangrads 2 mit der Drehgeschwindigkeit des Gleichlaufkörpers 3 zu synchronisieren.

Dabei kann die konisch ausgebildete Außenfläche 7 des innenliegenden Gleichlaufrings 6 mit der konischen Innenfläche 8 des außenliegenden Gleichlaufrings 5 direkt in Kontakt treten, um das notwendige Drehmoment zur Synchronisierung der Drehgeschwindigkeit des Gangrads 2 und des Gleichlaufkörpers 3 durch Reibung zu übertragen. Zwischen den beiden Gleichlaufringen 5,6 kann in herkömmlicher Weise ein Reibbelag 9 als Zwischenring zwischen den beiden Gleichlaufringen 5,6 angeordnet sein und die Reibung zwischen diesen übertragen.

Um die Reibung an den metallenen Gegenlaufflächen von Beginn an niedrig zu halten, werden diese mit einer Mangan-Phosphat-Schicht (MnPh) versehen. Diese Mangan-Phosphat-Beschichtung reduziert den Reibungkoeffizient der Flächen von Beginn an. Bei unbehandelten Metallflächen wird deren Rauheitsstruktur während einer Einlaufphase teilweise geglättet.

Die Mangan-Phosphat-Beschichtung der Bauteile senkt die jeweilige Haftreibungszahl, wodurch sich die Gleichlaufringe 5,6 nach der Synchronphase leichter voneinander trennen lassen. Für den Nutzer des Fahrzeugs führt eine einfache Trennung zu einem angenehmen und komfortablen Schaltgefühl, da der sogenannte zweite Druckpunkt beim Schalten abgesenkt wird.

Die Mangan-Phosphatierung kann sowohl an den Reibflächen der stählernen Gleichlaufringe 5,6 wie auch den Gleitflächen des ebenfalls aus Stahl herstellbaren Reibbelags 9 angebracht werden.

Die mit der Mangan-Phosphatierung versehenen Bauteile können vor dem Einbau zusätzlich durch Einlegen in das Getriebeöl oder eine spezielle Flüssigkeit beölt werden. Die Beschichtung hält das Öl, wodurch die zu Beginn des Bauteillebens noch hohe Haftreibungszahl weiter abgesenkt werden kann. Bei Mehrfachkonus-Synchronisierungen können auch mehrere Gegenlaufflächen beschichtet werden.

## Patentansprüche

1. Synchronisiereinrichtung (1) für ein Schaltgetriebe, mit zumindest zwei durch Reibung zusammenwirkenden Gleichlaufringen(5,6) aus Stahl,
**dadurch gekennzeichnet,**
**dass** zumindest einer der Gleichlaufringe (5,6) zumindest im Bereich einer Reibkontaktfläche eine Mangan-Phosphat-Beschichtung aufweist.

2. Synchronisiereinrichtung nach Anspruch 1,
**dadurch gekennzeichnet,**
**dass** zwischen zu synchronisierenden Gleichlaufringen (5,6) zumindest ein ebenfalls mit einer mit einer Mangan-Phosphat-Beschichtung versehener Reibbelag (9) angeordnet ist.

3. Synchronisiereinrichtung nach Anspruch 1 oder 2,
**dadurch gekennzeichnet,**
**dass** die Mangan-Phosphat-Beschichtung beölt ist.
